Europäisches Patentamt

European Patent Office

Office européen des brevets

(11) Publication number: **0 314 460 B1**

# EUROPEAN PATENT SPECIFICATION

(45) Date of publication of patent specification: **23.12.92**  (51) Int. Cl.⁵: **A47C 7/18**

(21) Application number: **88310070.3**

(22) Date of filing: **26.10.88**

(54) **Moulded seat cushions.**

(30) Priority: **28.10.87 GB 8725225**

(43) Date of publication of application:
**03.05.89 Bulletin  89/18**

(45) Publication of the grant of the patent:
**23.12.92 Bulletin  92/52**

(84) Designated Contracting States:
**BE DE ES FR GB IT NL SE**

(56) References cited:
**EP-A- 0 222 020**
**DE-A- 3 610 128**
**DE-A- 3 700 830**

(73) Proprietor: **FORD MOTOR COMPANY LIMITED**
**Eagle Way**
**Brentwood Essex CM13 3BW(GB)**
(84) Designated Contracting States:
**BE GB IT NL SE**

(73) Proprietor: **FORD-WERKE AKTIENGESELL-**
**SCHAFT**
**Werk Köln-Niehl Henry-Ford-Strasse Post-**
**fach 60 40 02**
**W-5000 Köln 60(DE)**
(84) Designated Contracting States:
**DE**

(73) Proprietor: **FORD FRANCE S. A.**
**B.P. 307**
**F-92506 Rueil-Malmaison Cédex(FR)**
(84) Designated Contracting States:
**FR**

(73) Proprietor: **FORD MOTOR COMPANY**
**County of Wayne**
**Dearborn, MI 48120(US)**
(84) Designated Contracting States:
**ES**

(72) Inventor: **Chatwin, Michael Edgar**
**4 Tiptree Road Wickham Bishops**
**Nr. Witham Essex CM8 3NB(GB)**

(74) Representative: **Messulam, Alec Moses et al**
**A. Messulam & Co. 24 Broadway**
**Leigh on Sea Essex SS9 1BN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to integrally moulded seat cushions for motor vehicles.

It is known to mould vehicle seat cushions by taking a female mould, placing across the mould a non-stretch textile seat covering made impervious to air and then applying vacuum to draw the covering into the mould. Once the covering is in place, a foam material is introduced into the mould and foamed in situ so that it produces a body of foam which adheres to the covering.

It is known in such cushions to form a pattern of feature lines. At each feature line, the covering surface is sharply indented and this allows a distinctive appearance to be given to the cushion and also helps to allow the dispersal of moist air from behind the seat occupant.

In order for this type of cushion production to be successful, it is important that the textile covering be made impervious to air so that it can be properly drawn into the mould by vacuum. It is possible to join two separate pieces of covering material to form a covering for a single cushion but when this is done it is necessary to make the seam between the joined pieces of material airtight.

According to the present invention, there is provided a method of manufacturing an integrally moulded cushion, wherein a single seamless sheet of textile material is used as a cushion covering, the sheet of material having at least one area separated by a transition line from another area which has a different surface appearance from said one area, wherein the cushion is moulded in a female mould, and the mould has internal ridges which will correspond to indentations in the finished cushion, and the textile sheet is placed in the mould so that the ridges register with the or each transition line.

The textile material is preferably a Jacquard weave material so that areas of different appearance can easily be formed in the textile material, and the transition lines can be of any desired configuration, in accordance with styling requirements. Possible alternative materials are however printed materials and surface treated materials.

The invention also provides an integrally moulded seat cushion comprising a textile covering integral with an internal body of moulded foam, wherein the textile covering comprises a single seamless piece of material, and the surface of the cushion is divided into different areas by indented lines in the seat surface, the surface appearance of the textile covering in one area differing from that in an area separated from said one area by a transition line which is in register with one or more of the indented lines.

The invention will now be described, by way of example, with reference to the accompanying drawing, in which:

Figure 1 is a perspective view of a seat cushion in accordance with the invention;

Figure 2 is a plan view of the seat of Figure 1;

Figure 3 is a cross section through the seat of Figure 2, on the line III-III, shown in proximity to a part of the mould in which the cushion is formed; and

Figure 4 shows a sheet of textile material for the manufacture of the seat cushion shown in the previous Figures, in its flat state before being placed in a mould.

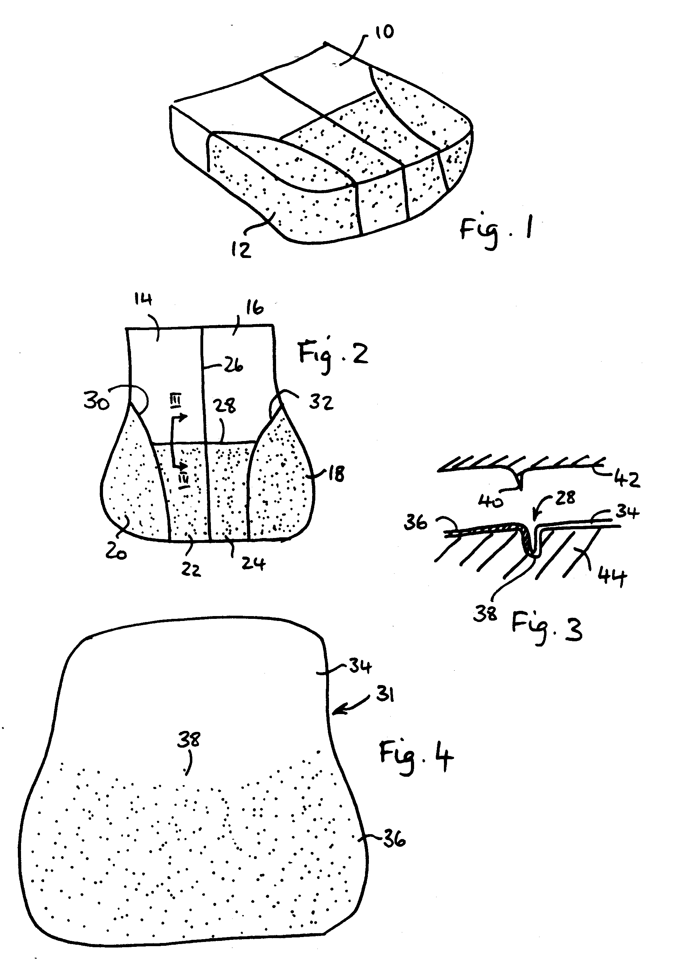

The cushion shown in Figure 1 has a seat surface 10 and side walls 12. The cushion is shown in its 'as moulded' form. When the cushion is mounted in a vehicle, the side walls will be surrounded by a shield of some form, but this aspect is of no relevance to the present invention.

It will be seen that the seat surface 10 (Figure 2) is divided into six different areas 14, 16, 18, 20, 22 and 24 by transition lines 26, 28, 30 and 32.

The areas 14 and 16 have one appearance and the areas 18, 20, 22 and 24 all have a second appearance which is common to all these areas but different from that of the areas 14 and 16. The difference between the areas will normally be a difference in pattern or colour, such as can be obtained using conventional Jacquard weaving techniques. Other ways of achieving the desired difference in surface appearance are however possible, and examples are the printing of the fabric or surface texture treatments.

From Figure 4 however, it will be seen that the initial sheet of fabric used to create the cushion shown in Figures 1, 2 and 3 has only two different areas, namely 34 and 36. The transition region 38 which separates these two areas corresponds with the transition line 28 and with parts of the transition lines 30 and 32.

Figure 3 shows the actual contours at one transition line 28 where there is a change of pattern across the line. A deep indentation 38 is formed (in a known manner) by including a corresponding male ridge 40 on the mould 42. When the cushion is withdrawn from the mould with the foam 44 cured, a homogeneous body of foam is formed behind the indentation, and this holds the indentation in the cushion. The positioning of the textile sheet 31 in the mould is controlled so that the transition 38 registers with the ridge 40.

The figures show a two-pattern cushion. However using the techniques described here, a cushion with any desired number of differently patterned panels could be produced.

The method described here can be applied to the squab and backrest of vehicle seats, but may also find application in other types of seating.

## Claims

1. A method of manufacturing an integrally moulded cushion, characterised in that a single seamless sheet of textile material is used as a cushion covering, the sheet of material having at least one area separated by a transition line from another area which has a different surface appearance from said one area, wherein the cushion is moulded in a female mould, and the mould has internal ridges which will correspond to indentations in the finished cushion, and the textile sheet is placed in the mould so that the ridges register with the or each transition line.

2. A method as claimed in Claim 1, wherein the textile material is a Jacquard weave material.

3. A method as claimed in Claim 1, wherein the textile material is a printed material.

4. A method as claimed in Claim 1, wherein the textile material has been subjected, at least in part, to a surface texture treatment.

5. An integrally moulded seat cushion comprising a textile covering integral with an internal body of moulded foam, characterised in that the textile covering (31) comprises a single seamless piece of material, and in that the surface of the cushion is divided into different areas by indented lines (26,28,30,32) in the seat surface, the surface appearance of the textile covering in one area (34) differing from that in an area (36) separated from said one area by a transition line which is in register with one or more of the indented lines.

## Patentansprüche

1. Methode zur Herstellung eines integral geformten Polsters, dadurch gekennzeichnet daß eine einzelne, nahtlose Bahn aus textilem Material als Polsterabdeckung verwendet wird, wobei die Materialbahn zumindest eine Fläche umfaßt, die durch eine Übergangslinie von einer anderen Fläche getrennt ist, die im Vergleich zur genannten einen Fläche ein anderes Aussehen der Oberfläche aufweist, wobei das Polster in einer Negativform ausgebildet ist, und wobei die Form interne Grate aufweist, die Vertiefungen im fertigen Polster entsprechen, und wobei das Einbringen der Textilbahn in die Form so erfolgt, daß die Grate mit der oder mit jeder Übergangslinie übereinstimmen.

2. Methode nach Anspruch 1, wobei es sich bei dem textilen Material um ein Jacquardgewebe handelt.

3. Methode nach Anspruch 1, wobei es sich bei dem textilen Material um ein bedrucktes Material handelt.

4. Methode nach Anspruch 1, wobei das textile Material zumindest teilweise eine Oberflächenstrukturbehandlung erfährt.

5. Integral geformtes Sitzpolster, das eine mit einem innenliegenden Körper aus Formschaum integral ausgebildete Textilabdeckung umfaßt, dadurch gekennzeichnet, daß die Textilabdeckung (31) ein einzelnes, nahtloses Materialstück umfaßt, und daß die Oberfläche des Polsters durch gezackte Linien (26, 28, 30, 32) in der Sitzoberfläche in verschiedene Flächen aufgeteilt ist, wobei sich das Aussehen der Oberfläche der Textilabdeckung in einer Fläche (34) von demjenigen in einer Fläche (36) unterscheidet, die von der genannten einen Fläche durch eine Übergangslinie getrennt ist, die mit einer oder mehreren der gezackten Linien übereinstimmt.

## Revendications

1. Procédé de fabrication d'un coussin venu de moulage d'un seul bloc, caractérisé par le fait qu'une seule et unique pièce de matériau textile, dépourvue de joints, est utilisée en tant que housse, la pièce de matériau comportant au moins une région séparée, par une ligne de transition, d'une autre région qui présente un aspect superficiel différant de celui de la région précitée, procédé dans lequel le coussin est moulé dans un moule femelle, et le moule possède des nervures internes destinées à correspondre à des creusures ménagées dans le coussin achevé, la pièce textile étant placée dans le moule de tel le sorte que les nervures coïncident avec la ou chaque ligne de transition.

2. Procédé selon la revendication 1, dans lequel le matériau textile est un matériau tissé au Jacquard.

3. Procédé selon la revendication 1, dans lequel le matériau textile est un matériau imprimé.

4. Procédé selon la revendication 1, dans lequel le matériau textile a été soumis, au moins en partie, à un traitement de texture superficielle.

5. Coussin venu de moulage d'un seul bloc, présentant une housse textile d'un seul tenant avec un corps interne en mousse moulée, caractérisé par le fait que la housse textile (31) est constituée d'une seule et unique pièce de matériau dépourvue de joints ; et par le fait que la surface du coussin est subdivisée en différentes régions, par des lignes empreintes (26, 28, 30, 32) pratiquées dans la surface d'assise, l'aspect superficiel de la housse textile différant, dans l'une (34) des régions, de celui d'une région (36) séparée, de la région précitée, par une ligne de transition qui coïncide avec l'une ou plusieurs des lignes empreintes.

Fig. 1

Fig. 2

Fig. 3

Fig. 4

5